# EUROPEAN PATENT APPLICATION

(11) **EP 1 916 780 A2**
(43) Date of publication of application: **30.04.2008**
(21) Application number: 07119326.2
(22) Date of filing: 25.10.2007
(51) Int. Cl.: H04B 7/06

(54) **Arrangement plus method to emulate a multi-path environment in a radio network arranged in or extended into an environment that is free of multi-path effects**

(30) Priority: 25.10.2006 DE 102006050179
(71) Applicant: Alcatel Lucent, 75008 Paris (FR)
(72) Inventor: Hettstedt, Heinz-Deiter, 30916 Isernhagen (DE); Kishnio, Yasuriho, Minato-ku Tokyo 107-0052 (JP); Osaka, Ken, Tokyo 107-0052 (JP); Wang, Weili, Rocky Hill, CT 06067 (US)
(74) Representative: Wetzel, Emmanuelle

(57) **Abstract**

An arrangement (1) to emulate a multi-path environment in a wireless network, particularly in an UMTS or a CDMA network arranged in or extended into an environment that is free of multi-path effects like e.g. an environment inside of buildings, tunnels and the like is described, wherein said arrangement is characterized by at least two parallel Radio Frequency signal paths (AC, BC) showing different time delays, wherein said signal paths (AC, BC) on their first sides (C) are connected with each other and on their second sides (A, B) are connected with own antennas (4, 5) respectively. Furthermore a method to emulate a multi-path environment in a wireless network is described, said method comprising the steps of:
- generating at least two substantially identical signals from one signal
- individually delaying said substantially identical signals by different time delays,
- combining said individually delayed signals in order to generate a new signal showing a behavior similar to a signal in a multi-path environment.

## Description

### Technical field:

The invention relates to an arrangement plus a method to emulate a multi-path environment in a radio network, particularly in an UMTS or a CDMA network arranged in or extended into an environment that is free of multi-path effects like e.g. an environment inside of buildings, tunnels and the like.

### Background of the invention:

In buildings and tunnels, RF networks comprising radiating cables and/or antennas are used to establish networks for radio communications. Typical applications of networks for radio communications are CDMA (Code Division Multiple Access) and UMTS (Universal Mobile Telecommunications System).

Normal outdoor cell environment provides multi path channels between a base station, also known as Node B in UTRAN (UMTS Terrestrial Radio Access Network) and a mobile station due to signal reflection at buildings, trees and the like. ln such a so-called multi-path environment the time delay between the individual multi-path channels typically is higher than 250 ns. In specific environments like e.g. inside buildings and tunnels or between large buildings standing close to each other like e.g. in streets between skyscrapers, the time delay between multi-path channels can be shorter than the minimum duration of one chip length of 250 ns. In the following, environments showing time delays of less than one chip length are denoted as environments that are free of multi-path effects. In such a case there is no benefit from the technical advantages of so called rake receivers typically used in UTRAN Node Bs and UMTS mobile stations such as mobile phones, handheld computers and the like,

A rake receiver is a radio receiver designed to counter the effects of multi-path fading. It does this by using several sub-receivers each delayed slightly in order to tune in to the individual multi-path channels. Each multi-path channel is decoded independently, but at a later stage combined in order to make the most use of the different transmission characteristics of each transmission path.

Thereby a rake receiver shows a higher Signal to Noise Ratio (SNR) in a multi-path environment than in an environment without multi-path effects. Since typically rake receivers are installed in mobile and base stations because of their advantageous performance in multi-path environments, the problem arises that in environments that are free of multi-path effects no benefits can be drawn from said rake receivers. Quite in contrary, the rake receivers typically installed in mobile and base stations show a worse performance in environments that are free of multi-path effects than in multi-path environments.

### Object of the invention.

An object of the invention is to find a remedy for this problem.

### Disclosure of the invention and its advantages:

The object of the invention is met by an arrangement to emulate a multi-path environment in a wireless network, particularly in an UMTS or a CDMA network arranged in or extended into an environment that is free of multi-path effects like e.g. an environment inside of buildings, tunnels and the like, said arrangement comprising at least two parallel RF signal paths showing different time delays to RF signals passing said signal-paths, wherein said signal paths on their first sides are connected with each other and on their second sides are connected with own antennas respectively.

The antennas preferably are located close to each other, preferably at a spacing greater than a quarter of a wavelength. Doing so has the advantage to compensate fading effects. In case that one of a pair of antennas receives a weak signal level the other would receive a higher signal level if the spacing between the antenna locations is greater than a quarter of a wavelength. Thus the mean value of the combined signal levels of both antennas is higher than that of a single antenna.

The arrangement according to the invention preferably is used as a passive repeater for an air interface between an outdoor mobile communications cell and its extension into indoor environments, like e.g. inside buildings, tunnels and the like. To do so, the arrangement according to the invention comprising a node connecting the individual signal paths with each other is connected with a base station that is arranged outside of said indoor environment indirectly via a RF network or with a single antenna in a building.

The arrangement according to the invention can be used for outgoing signals only, i.e. for emitted radio signals, or for outgoing and incoming signals, i.e. also for received radio signals.

By using the arrangement according to the invention for outgoing signals only, an outgoing signal that passes through the arrangement from the node to the antennas at the node is split into at least two substantially identical sub-signals. Thereby number of sub-signals depends on the number of individual signal paths. The sub-signals substantially synchronously are fed into the individual signal paths that all show different time delays, The sub-signals when arriving at the antennas then have different time delays, When feeding the antennas connected with the individual signal paths with the individual delayed sub-signals, said antennas then emit radio signals showing different time delays among each other. All radio signals that are generated from the same outgoing signal and that are emitted by the antennas together form a new radio signal showing a behavior similar to a radio signal in a multi-path environment. Receiving said new radio signal by a rake receiver, e.g. arranged in a base station forming a mobile communications cell outside e.g. a building into which said cell is extended by the arrangement according to the invention, allows to tap the full potential of said rake receiver.

If the arrangement according to the invention is also used for incoming radio signals, one radio signal received from the individual antennas substantially at the same time forms as many substantially identical received signals as antennas and signal paths are comprised in the arrangement according to the invention. The received signals resulting from said single radio signal then are individually delayed within the individual signal paths connected with said antennas. The individually delayed received signals then are combined at the node connecting the individual signal paths with each other to a new signal showing a behavior similar to a radio signal in a multi-path environment. Feeding a rake receiver, e.g. arranged in a mobile station that is used e.g. inside a building into which a mobile communications cell is extended by an arrangement according to the invention, with the combined signal allows to tap the full potential of such a rake receiver.

The arrangement according to the invention has the advantage over the state of the art that it allows using rake receivers as particularly used in UMTS and CDMA base and mobile stations in environments showing no multi-path effects by emulating signals showing increased multi-path behavior in said radio networks, i.e. preferably showing a time delay between the individual multi-path channels that is higher than 250 ns. This improves the quality of UMTS and CDMA radio networks, i.e. the communication performance particularly inside of buildings and tunnels, where arrangements according to the invention preferably are used as passive repeaters to extend external mobile communications cells into such environments. Thereby the arrangement according to the invention preferably is used to connect a RF network inside a building with a base station forming a mobile communications cell outside of said building. The base station via said arrangement transmits signals to mobile stations located inside of said building and also via said arrangement receives signals from inside of said building. This allows to tap the full potential of rake receivers. Generally it is also thinkable to use an arrangement according to the invention within a base station in combination with a transmitter chain of said base station or in combination with a transceiver circuit comprising a transmitter chain plus a receiver chain of said base station. Doing so, a base station itself can be used to extend radio networks into indoor environments.

According to a preferred embodiment of the invention, the time delay between the individual signal paths is at least one chip length of 250 ns. If only two signal paths are arranged parallel to each other, the time delay between the first and the second signal path is at least one chip length. Process gain can be achieved when rake-receivers combine different signals in phase to one resulting signal.

The condition for using rake receivers is that multi-path signals show different time delays of more than one chip length. If more than two signal paths are foreseen, the difference in time delay between the individual signal paths preferably is one chip length, i.e. the individual signal paths provide time delays of one, two, three etc. chip lengths.

According to another preferred embodiment of the invention, the time delay between the individual signal paths is a multiple of one chip length.

A preferred embodiment of the invention comprises a Radio Frequency Coupler (RFC) that connects the individual signal paths with each other. The RFC preferably splits and/or combines RF signals in away that the individual insertion losses within each signal path are equivalent.

According to an additional preferred embodiment of the invention, a first signal path remains unchanged, wherein at least in a second signal path a Radio Frequency Delay Unit is arranged.

RFDUs as known e.g. from US 801,150, from US 2,916,615. from EP 1 058 337 A3 and from EP 0 301 674 B1 comprise an electric waveguide that encloses, is surrounded or is arranged proximate to a specific dielectric. The dielectric reduces the velocity of the electromagnetic waves from light-speed in vacuum to a lower velocity, depending on the material of the dielectric. The most common type of a RFDU is a coaxial waveguide wherein the inner conductor is a helix, By influencing the permeability of the dielectric, a tunable RFDU as known from US 6,556,102 B1 is received,

Furthermore from WO 2005/031999 A1 a tunable RFDU is known, comprising two parallel signal paths, one with a fixed delay, wherein both signal paths provide an electrically adjustable attenuation. Thereby an incoming signal is delayed by an adjustable time depending upon the attenuations provided by the signal paths.

According to the invention, at least one RFDU is arranged parallel to e.g. an unchanged transmission line forming a first signal path, wherein outgoing and incoming signals are transmitted simultaneously through the unchanged transmission line as well as through the RFDU forming the second signal path.

Thereby it is thinkable that the time delay of the RFDU is variable and adjustable.

Another preferred embodiment of the invention comprises amplifier modules arranged in the individual signal paths in order to compensate insertion losses.

An additional preferred embodiment of the invention preferably comprises three or four parallel signal paths on their first sides connected with each other and on their other sides connected with own antennas, wherein the individual signal paths provide individual time delays of zero, one, two and three chip lengths respectively.

According to a particularly preferred embodiment of the invention, at least one signal path comprises individual delay lines and/or filters for uplink and for downlink, in order to get signals with identical time delays for up- and downlink but with individual RF path bands, i.e. for outgoing and incoming signals or vice versa.

Another preferred embodiment of the invention concerns a method to emulate a multi-path environment in a wireless network, particularly in an UMTS or a CDMA network in an environment that is free of multi-path effects like e.g. an environment inside of buildings, tunnels and the like, wherein said method comprises the steps of:
- generating at least two substantially identical signal from one signal,
- individually delaying said substantially identical signals by different time delays,
- preferably providing said individually delayed signals to a rake receiver by combining said individually delayed signals in order to generate a new signal showing a behavior similar to a signal in a multi-path environment wherein such a new signal increases the performance of rake receivers in environments that are free of multi-path effects.

According to a preferred embodiment of said method according to the invention, the time delay between said individually delayed signals at least is one chip length of 250ns.

According to an additional preferred embodiment of said method according to the invention, at least two substantially identical signals are generated by substantially synchronously receiving a radio signal with at least two antennas, wherein said substantially identical signals are individually delayed by individual signal paths that are connected with said antennas and that show different time delays, and wherein said new signal showing a behavior similar to a signal in a multi-path environment is generated by merging said individually delayed signals in a node connecting said individual signal paths distal from the antennas with each other. Preferably said node is connected with a RF network, a CDMA and/or UMTS base station and the like. Furthermore said node preferably comprises a RFC.

According to another preferred embodiment of said method according to the invention, at least two substantially identical signals are generated by substantially equally splitting an outgoing signal, wherein said substantially identical signals are individually delayed by synchronously feeding them into individual signal paths showing different time delays, and wherein said new signal showing a behavior similar to a signal in a multi-path environment is generated by emitting said individually delayed signals via individual antennas.

According to a particularly preferred embodiment of said method according to the invention, the substantially identical signals show identical time delays for uplink and for downlink, e.g. by the signal paths having identical time delays but individual RF path band filters for uplink and for downlink.

### Brief description of the drawing, with

- Fig. 1: showing a schematic diagram of a first arrangement to emulate a multi-path environment in a radio network, wherein said first arrangement shows identical behavior for outgoing, i.e. emitted, and incoming, i.e. received signals, and
- Fig. 2: showing a schematic diagram of a second arrangement to emulate a multi-path environment in a radio network, wherein said second arrangement shows individual RF path bands for outgoing, i.e. transmitted, and incoming, i.e. received signals.

### Detailed description of the drawing:

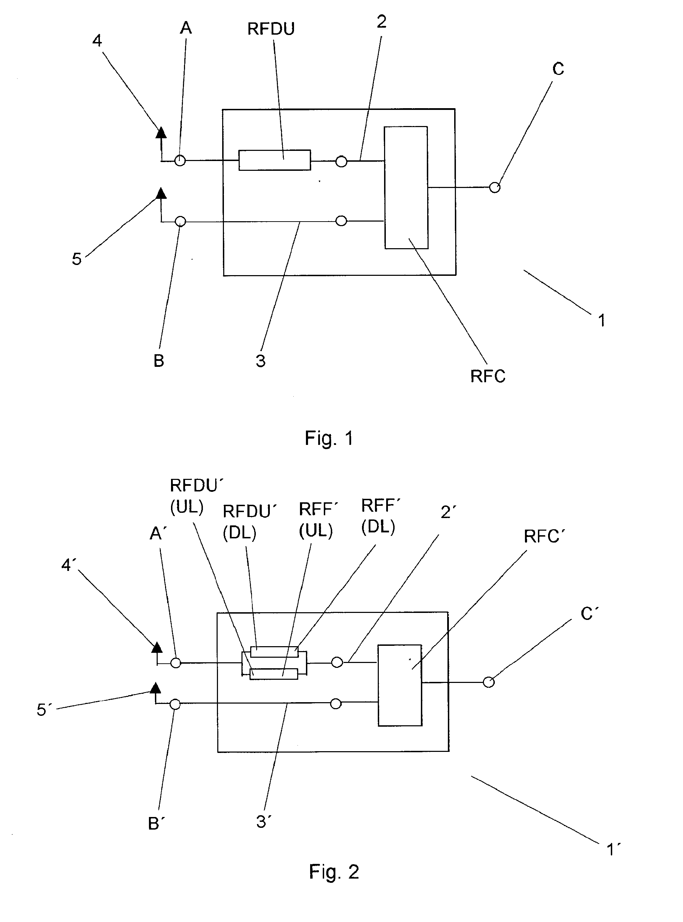

An arrangement 1 according to the invention as shown in Fig. 1 comprises three nodes A, B, C. A Radio Frequency Coupler RFC is arranged between the nodes A, B and C. Two parallel transmission lines 2, 3 are arranged between the nodes A and B and the Radio Frequency Coupler RFC. The transmission line 3 connects the node B with the Radio Frequency Coupler RFC, wherein the transmission line 2 connects the nodes A with the Radio Frequency Coupler RFC. The transmission line 2 at node A is connected with an own antenna 4. Also the transmission line 3 at node B is connected with an own antenna 5.

The antenna 4, the transmission line 2 and the Radio Frequency Coupler RFC together form a first signal path AC, wherein the antenna 5, the transmission line 3 and the Radio Frequency Coupler RFC together form a second signal path BC.

In the second signal path AC a Radio Frequency Delay Unit RFDU is arranged, that delays a signal passing the second signal path for at least one chip length of 250ns. More particularly, the time delay in the second signal path AC is at least one chip length higher than in the first signal path BC.

By using the arrangement 1 according to the invention, an outgoing signal that is fed from node C into the arrangement 1 in Fig. 1 is split by the Radio Frequency Coupler RFC into two substantially identical sub-signals. Both sub-signals are synchronously fed into the two parallel signal paths AC, BC. The first sub-signal fed into the first signal path BC is not delayed. It is substantially immediately emitted as a first radio signal by the antenna 5. The second sub signal fed into the second signal path AC is delayed by the Radio Frequency Delay Unit RFDU for a time delay of substantially one chip length, This second sub-signal is emitted as a second radio signal by the antenna 4 one chip length later than the first radio signal is emitted from the antenna 5.

By emitting both radio signals with a different time delay of one chip length via individual antennas 4, 5, the radio signals resulting from the sub-signals together generate a new radio signal showing a behavior similar to a radio signal in a multi-path environment.

By using the arrangement 1 according to the invention, a radio signal is substantially synchronously received by both antennas 4, 5. Said substantially identical received signals are individually delayed by the signal paths AC, BC connected with the antennas 4. 5. The signal received by antenna 5 is not or only slightly delayed, wherein the signal received from antenna 4 is delayed by the Radio Frequency Delay Unit RFDU for one chip length. The Radio Frequency Coupler RFC merges both received and individually delayed signals to a new signal showing a behavior similar to a signal in a multi-path environment.

The arrangement 1 according to the invention preferably is used as a passive repeater for an air interface between an outdoor mobile communication cell and its extension into indoor environments, like e.g. inside buildings, tunnels and the like. To do so, the arrangement 1 according to the invention with its node C is directly connected with an RF network or a single antenna inside a building or another environment showing no multi-path effects and indirectly connected with a base station that is arranged outside of said indoor environment. Within the base station, a rake receiver is arranged that benefits from the emulation of the multi-path environment by the arrangement 1 according to the invention, wherein to emulate such an environment,
- two substantially identical signals are generated from one signal,
- said substantially identical signals are individually delayed by different time delays, and
- said individually delayed signals are combined in order to generate a new signal showing a behavior similar to a signal in a multi-path environment.

Doing so, a mobile station that is used e.g. in an UMTS mobile communications cell that is extended into an indoor environment by using an arrangement according to the invention, can remain unchanged, since a rake receiver in said mobile station receives radio signals showing multi-path behavior generated by the arrangement according to the invention. Furthermore a base station like e.g. in an UTRAN Node B also can remain unchanged, if an arrangement according to the invention is used to extend the mobile communications cell into an indoor environment. A mobile station within the indoor environment emits a radio signal showing no multi-path effects. The indoor environment further does not force multi-path effects to said signal emitted by the mobile station. Due to this, the arrangement according to the invention receives one radio signal and generates a new signal emulating a multi-path environment. This new signal is transmitted by the passive repeater to the rake receiver within the base station outside the building. The rake receiver benefits from the multi-path behavior of this signal by an improved SNR, resulting in an improved communication performance.

It is important to mention that the arrangement according to the invention can be used for outgoing signals only, i.e. for emitted radio signals, but also for outgoing and incoming signals, i.e. also for received radio signals.

Using an arrangement according to Fig. 1, the same time delay in Uplink (UL) and Downlink (DL) is achieved,

| | | |
|---|---|---|
| Time Delay (AC) | >> | Time delay (BC) |
| Insertion Loss (AC) | ≈ | Insertion Loss (BC) |

Instead of using a Radio Frequency Delay Line, it is also thinkable to use two individual band-selective filters for uplink and downlink providing preferably identical time delays.

In Fig. 2 a second arrangement 1' according to the invention is shown. This arrangement 1' comprises a signal path with identical time delays but with individual RF path band filters RFDU' for uplink (UL) and downlink (DL), i.e. for incoming (UL) and outgoing (DL) signals. This arrangement 1' also comprises three nodes A', B', C'. A Radio Frequency Coupler RFC' is arranged between the nodes A', B' and C'. Two parallel transmission lines 2', 3' are arranged between the nodes A' and B' and the Radio Frequency Coupler RFC' respectively. The transmission line 3' connects the node B' with the Radio Frequency Coupler RFC', wherein the transmission line 2' connects the node A' with the Radio Frequency Coupler RFC'. The transmission line 3' at node B' is connected with an own antenna 5'. Also the transmission line 2' at node A' is connected with an own antenna 4'.

The antenna 4', the transmission line 2' and the Radio Frequency Coupler RFC' together form a first signal path AC', wherein the antenna 5', the transmission line 3' and the Radio Frequency Coupler RFC' together form a second signal path BC'.

In the second signal path AC' two Radio Frequency Delay Unit RFDU' are arranged in parallel that delay outgoing and incoming signal passing the second signal path AC' for at least one chip length of 250ns. More particularly, the time delay for an outgoing signal in the second signal path AC' is at least one chip length higher than in the first signal path BC',

Also in the second signal path AC' two Radio Frequency Filters RFF' are arranged in parallel. Both RF Filters RFF' select incoming signals in DL and transmitted signals in UL. It is thinkable that the RF Fitters RFF (UL) and RFF (DL) are comprised in the Radio Frequency Delay Units RFDU'(UL) and RFDU'(DL),

By using an arrangement according to Fig. 2, the following characteristics are achieved:

| | | |
|---|---|---|
| Time delay (AC, DL) | >> Time delay (BC) | |
| Time delay (AC, DL) | > | 1 chip length. |
| Time delay (AC, UL) | ≈ | Time delay (AC, DL) |
| Insertion Loss (AC,DL) | ≈ | Insertion Loss (AC, UL) |
| Insertion Loss (AC) | ≈ | Insertion Loss (BC). |

Thereby individual band-selective filters that are arranged parallel to each other are used for uplink and downlink.

It is important to mention, that the arrangement according to the invention can be used as passive repeater providing internal differential time delays of more than 1 chip length. Such a passive repeater can be used in environments where normally the time delays due to multi-path transmissions are less than 1 chip length.

Such passive repeaters can be used for CDMA and 3 G applications with advantages of system performance improvements. The passive repeaters can be used as air interface between outdoor cells and their extensions into buildings, wherein the application is focused and limited to locations where the overall differential time delay is shorter than 1 chip length, This may be the combination of buildings and also tunnels with Node Bs in city areas with small cell radii.

### Commercial applicability:

The invention is commercially applicable particularly in the field of production and operation of wireless networks for radio communications in buildings, tunnels and the like.

## Claims

1. Arrangement (1) to emulate a multi-path environment in a wireless network, particularly in an UMTS or a CDMA network arranged in or extended into an environment that is free of multi-path effects like e.g. an environment inside of buildings, tunnels and the like,
**characterized by**
at least two parallel Radio Frequency signal paths (AC, BC) showing different time delays, wherein said signal paths (AC, BC) on their first sides (C) are connected with each other and on their second sides (A, B) are connected with own antennas (4, 5) respectively.

2. Arrangement according to claim 1,
**characterized in**
**that** the time delay between the individual signal paths is at least one chip length (250 ns).

3. Arrangement according to claim 1 or 2,
**characterized in**
**that** the time delay between the individual signal paths is a multiple of one chip length.

4. Arrangement according to one of the previous claims,
**characterized by**
a Radio Frequency Coupler (RFC) connecting the individual signal paths (CA, CB) with each other.

5. Arrangement according to one of the previous claims,
**characterized in**
**that** a first signal path (CB) remains unchanged, wherein in at least a second signal path (CA) a Radio Frequency Delay Unit (RFDU) is arranged.

6. Arrangement according to claim 5,
**characterized in**
**that** the time delay of the Radio Frequency Delay Unit (RFDU) is variable and adjustable.

7. Arrangement according to one of the previous claims,
**characterized by**
amplifier modules arranged in the individual signal paths in order to compensate insertion losses.

8. Arrangement according to one of the previous claims,
**characterized by**
preferably three or four parallel signal paths.

9. Arrangement according to one of the previous claims,
**characterized in**
**that** at least one signal path (AC') comprises individual delay lines (RFDU(UL), RFDU'(DL)) and/or filters (RFF'(UL). RFF'(DU))for uplink and for downlink,

10. Method to emulate a multi-path environment in a wireless network, particularly in an UMTS or a CDMA network in an environment that is free of multi-path effects like e.g. an environment inside of buildings, tunnels and the like, comprising the steps of:
- generating at least two substantially identical signals from one signal
- individually delaying said substantially identical signals by different time delays,
- combining said individually delayed signals in order to generate a new signal showing a behavior similar to a signal in a multi-path environment.

11. Method according to claim 10,
wherein the time delay between said individually delayed signals at least is one chip length (250ns).

12. Method according to claim 10 or 11,
**characterized in**
**that** at least two substantially identical signals are generated by substantially synchronously receiving a radio signal with at least two antennas, wherein said substantially identical signals are individually delayed by individual signal paths connected with said antennas showing different time delays, and wherein said new signal showing a behavior similar to a signal in a multi-path environment is generated by merging said individually delayed signals in a node connecting said individual signal paths with each other.

13. Method according to claim 10 or 11,
**characterized in**
**that** at least two substantially identical signals are generated by substantially equally splitting an outgoing signal, wherein said substantially identical signals are individually delayed by synchronously feeding them into individual signal paths showing different time delays, and wherein said new signal showing a behavior similar to a signal in a multi-path environment is generated by emitting said individually delayed signals via individual antennas.

14. Method according to one of the claims 10 to 13,
**characterized in**
**that** the substantially identical signals show different time delays for uplink and for downlink.
